# FASCICULE DE BREVET EUROPEEN

(11) **EP 3 350 425 B1**
(45) Date de publication et mention de la délivrance du brevet: **20.02.2019**
(21) Numéro de dépôt: 16775309.4
(22) Date de dépôt: 13.09.2016
(51) Int. Cl.: F01M 13/00

(54) **AGENCEMENT ET MÉTHODE POUR RÉGULER UN FLUX DE GAZ DE CARTER D'UN MOTEUR À COMBUSTION INTERNE AVANT UNE SÉPARATION D'HUILE**
VERFAHREN UND VORRICHTUNG ZUR STEUERUNG DES KURBELGEHÄUSEGASSTROMS VOR DER ÖLABSCHEIDUNG
DEVICE AND METHOD FOR REGULATING BLOWBY GAS FLOW IN AN ENGINE BEFORE OIL SEPARATION

(30) Priorité: 14.09.2015 FR 1558533
(43) Date de publication de la demande: 25.07.2018
(73) Titulaire: Sogefi Filtration, 78280 Guyancourt (FR)
(72) Inventeur: BONNE, Samuel, 14350 La Graverie (FR); PETIPAS, Christophe, 78150 Le Chesnay (FR); OURSIN, Dominique, 92350 Le Plessis Robinson (FR)
(74) Mandataire: Cabinet Plasseraud
(86) Numéro de dépôt international: PCT/FR2016/052306
(87) Numéro de publication internationale: WO 2017/046509

(56) Documents cités:
- DE-A1-102005 043 735
- DE-A1-102009 008 831
- DE-A1-102009 009 799
- DE-A1-102011 004 719
- JP-A- S59 126 014
- US-A1- 2010 077 972

## Description

### DOMAINE DE L'INVENTION

La présente invention est relative aux dispositifs pour contrôler le flux de gaz chargés d'éléments en suspension dans un moteur à combustion interne, ces gaz étant mis en circulation dans un circuit de recyclage des gaz de carter qui présente un système d'épuration d'huile.

Le champ d'application de l'invention concerne en particulier le contrôle des gaz de carter dans les moteurs thermiques des véhicules routiers (ex : automobiles, poids lourds, motocyclette), bateaux ou moteurs thermiques industriels (groupe électrogène par exemple).

### ARRIERE-PLAN TECHNOLOGIQUE DE L'INVENTION

Un contrôle de la circulation des gaz de carter doit être réalisé, notamment sur les moteurs à essence turbo, lorsque l'on souhaite diriger de tel gaz soit vers le répartiteur (par exemple à faible charge du moteur, sachant qu'il règne une dépression suffisante dans le répartiteur), soit vers l'amont du turbo en fonction des phases de fonctionnement moteur. La gestion de ces flux d'air propre et vicié (gaz de « blow by ») est pilotée par la nécessité d'avoir toujours le carter moteur en dépression.

Plus généralement, on comprend qu'il peut être nécessaire de pouvoir diriger de manière sélective des gaz de carter, en fonction de la charge moteur :
- soit dans une première zone du circuit d'admission d'air,
- soit dans une deuxième zone du circuit d'admission d'air, distincte de la première zone.

Pour cela il est connu d'utiliser plusieurs clapets. Sur les moteurs à essence turbo en particulier, on utilise un clapet anti-retour permettant, à l'état ouvert, de diriger les gaz de carter dans la zone amont du turbo. En cas de charge insuffisante, le clapet anti-retour est fermé et un autre clapet d'accès au répartiteur est typiquement ouvert (il s'agit d'un mode de circulation à pression négative). A forte charge, la pression dans le répartiteur est positive, de sorte que ce clapet d'accès au répartiteur se ferme, tandis que le clapet anti-retour s'ouvre. L'objectif est de toujours disposer d'une pression négative pour mettre le carter moteur en dépression.

D'autre part, afin de limiter la dépression, un clapet taré peut être parfois ajouté. Il fait office de régulation de pression. Pour que ce clapet fonctionne bien (au regard des faibles ordres de grandeur de pression), il doit avoir une surface importante. DE 10 2005 043735 divulgue un dispositif de régulation d'un flux de gaz selon l'état de la technique.

Il existe un problème d'encombrement dans les systèmes précités qui permettent un contrôle de la circulation des gaz de carter. En effet, l'environnement sous le couvre-culasse est généralement encombré, un ou plusieurs dispositifs de séparation d'huile étant disposés à cet endroit (dispositifs qui peuvent faire partie du circuit de recyclage à l'admission d'air). Il existe donc un besoin pour intégrer des moyens efficaces de contrôle/régulation du flux des gaz de carter de façon très compacte.

### OBJETS DE L'INVENTION

La présente invention a pour but de pallier un ou plusieurs des inconvénients susmentionnés en proposant un agencement à clapets pour réguler un flux de gaz de carter qui reste simple de conception et d'intégration, tout en présentant un bon compromis entre la compacité d'une part et l'efficacité de la séparation d'autre part.

A cet effet, l'invention concerne un agencement pour réguler un flux de gaz chargés issu d'un carter de moteur à combustion interne, destiné à être placé entre une zone amont d'amenée de gaz chargés et une zone en aval communiquant avec un système de recyclage à l'admission d'air moteur, comprenant :
- un clapet anti-retour qui présente une partie d'obturation s'ouvrant sous l'effet d'une pression positive pour définir un premier passage pour un premier sens de circulation (i.e. dans une première configuration lorsque la pression gazeuse dans la zone amont est supérieure à la pression gazeuse dans la zone en aval) ;
- un clapet de dérivation, également appelé clapet "by-pass", mis en mouvement par une pression négative et permettant de définir un deuxième passage pour un second sens de circulation inverse du premier sens de circulation (dans une deuxième configuration lorsque la pression gazeuse dans la zone en aval est supérieure à la pression gazeuse dans la zone amont) ;
- un tronçon de conduite qui présente une surface de siège stationnaire adaptée pour délimiter avec le clapet de dérivation le deuxième passage ;
- un élément de rappel élastique en prise avec l'un parmi le clapet anti-retour et le clapet de dérivation ;
sachant que le clapet de dérivation définit un siège sur lequel la partie d'obturation du clapet anti-retour vient s'appuyer dans une configuration de fermeture du premier passage, l'élément de rappel élastique exerçant une force de rappel, orientée suivant une première direction dite avant, qui sollicite le clapet de dérivation vers une position d'obturation du deuxième passage,
avec la particularité que la partie d'obturation du clapet anti-retour et le clapet de dérivation sont adaptés pour reculer suivant une deuxième direction dite arrière opposée à la première direction, sous l'effet de la pression négative.

Grace à ces dispositions, on cumule les fonctions réalisées habituellement par deux clapets en utilisant un élément de rappel élastique, préférentiellement unique, qui autorise, sous l'effet de la pression négative, le déplacement du clapet de dérivation vers une position en arrière qui libère le deuxième passage (bien entendu, on utilise dans la présente description les termes avant et arrière de manière homogène, l'avant se situant toujours du côté opposé à l'amenée).

La localisation au même endroit de deux clapets mobiles permet en gain de compacité, sans qu'il soit nécessaire de réduire la section des clapets de façon excessive. La section du clapet de dérivation peut être importante et le clapet de dérivation peut être typiquement formé d'une partie d'obturation plus rigide que la partie d'obturation du clapet anti-retour. On évite ainsi d'utiliser une section de clapet trop petite, ce qui peut typiquement poser des problèmes liés à la raideur trop faible du ressort (ou moyen équivalent formant l'élément de rappel), sachant que le clapet de dérivation doit être déplacé pour libérer le deuxième passage dès l'apparition de faibles dépressions, par exemple de l'ordre de 40 mbar selon certaines prescriptions de constructeurs automobiles.

Selon une particularité, l'élément de rappel élastique s'étend entre une première extrémité et une deuxième extrémité qui sont alignées selon un axe de déplacement commun au clapet anti-retour et au clapet de dérivation, la première extrémité étant solidaire en coulissement du clapet de dérivation, la deuxième extrémité étant en contact avec une surface de butée immobile. Avec ce type d'agencement, le clapet anti-retour peut être mieux guidé, par exemple par l'intermédiaire d'une tige axiale sur laquelle le clapet de dérivation est directement monté solidaire. On comprend que le clapet anti-retour et le clapet de dérivation sont alors chacun mobiles en coulissement et guidés à l'aide d'au moins une même tige, qui de préférence fait partie du clapet de dérivation. Le clapet anti-retour est dans ce cas particulièrement stable (malgré un environnement soumis à des nombreuses vibrations) et ceci améliore ainsi l'obturation du premier passage.

Selon une autre particularité, la partie d'obturation du clapet anti-retour, de préférence dépourvue d'ouverture, présente une face déterminée vient en contact annulaire avec le siège pour obtenir la configuration de fermeture du premier passage, cette face déterminée étant orientée suivant la deuxième direction, en opposition à la force de rappel. Le contact annulaire est ainsi un contact axial (non radial) qui limite les frottements contre le clapet de dérivation.

Dans divers modes de réalisation de l'agencement prévu pour réguler un flux de gaz chargés, on peut selon l'invention éventuellement avoir recours en outre à au moins l'une des dispositions suivantes :
- le clapet de dérivation comprend au moins un orifice de passage en vis-à-vis de la partie d'obturation, le clapet anti-retour étant non sollicité ou moins sollicité vers l'avant par l'élément de rappel élastique que le clapet de dérivation, de sorte que le clapet de dérivation recule pour libérer le deuxième passage seulement dans une configuration fermée du premier passage dans laquelle la partie d'obturation obture ledit orifice de passage (ainsi, l'élément de rappel autorise le déplacement d'un seul tenant de l'ensemble mobile formé par les deux clapets pour obtenir la deuxième configuration).
- la tige présente une partie qui coulisse dans un guide fixe déterminé pourvu d'une surface de butée qui permet de définir la position d'une extrémité fixe de l'organe de rappel élastique, l'organe de rappel élastique étant de préférence un ressort hélicoïdal.
- la partie venant le long du guide fixe est, de préférence, une partie intermédiaire distante des extrémités de la tige.
- l'agencement comprend un guide fixe déterminé pour le coulissement d'une première extrémité de la tige, par exemple du côté avant.
- l'agencement comprend un guide fixe additionnel pour guider une deuxième extrémité de la tige, par exemple du côté arrière.
- le tronçon de conduite, réalisé d'une pièce en matière plastique, définit un support de montage pour le clapet de dérivation et comprend un manchon axial qui définit le guide fixe déterminé.
- le manchon axial présente une extrémité proximale par rapport au clapet anti-retour et le clapet anti-retour, qui comprend de préférence un matériau élastomère, est monté mobile en coulissement sur la tige entre cette extrémité proximale, de préférence fermée, du manchon axial et une portion ajourée du clapet de dérivation.
- le tronçon de conduite comporte aussi une portion externe annulaire solidaire du manchon axial, comprenant une face périphérique externe typiquement adaptée pour se fixer par un contact radial étanche dans un conduit rigide du circuit de gaz chargés.
- la portion externe annulaire du tronçon de conduite définit, par une face axiale annulaire, la surface de siège stationnaire, au moins une ouverture de passage étant définie par le tronçon dans un plan commun avec la surface de siège stationnaire, sachant que le tronçon présente au moins un passage longitudinal formé entre le manchon axial et la portion externe annulaire, et débouchant du côté de l'ouverture de passage dans une configuration ouverte du premier passage et du deuxième passage, respectivement.
- ledit passage longitudinal du tronçon peut se composer en plusieurs canaux longitudinaux qui débouchent dans une même extrémité de passage de section plus large qui correspond à la zone de déplacement du clapet anti-retour.
- le clapet de dérivation présente une portion ajourée raccordée centralement à la tige, ledit siège dans une zone annulaire périphérique de la portion ajourée et une jupe, de préférence de forme générale cylindrique.
- la jupe supporte extérieurement un joint annulaire d'étanchéité adapté pour venir s'appuyer contre la surface de siège stationnaire.
- le clapet de dérivation présente des pattes de guidage, allongées chacune suivant la première direction depuis une zone annulaire en contact avec le joint annulaire, et adaptées pour s'ajuster contre une face interne annulaire du tronçon de conduite et délimiter une fin de course du mouvement de recul du clapet de dérivation.
- l'élément de rappel élastique est un ressort monté de façon à être énergisé en compression lorsque le deuxième passage est libéré.
- le clapet de dérivation présente une portion ajourée qui définit une face d'entrée pour les gaz chargés circulant à travers le premier passage (face d'entrée de l'agencement), le ressort s'étendant essentiellement du côté de la face d'entrée.
- alternativement, le ressort s'étend essentiellement du côté opposé à la face d'entrée de l'agencement.
- le tronçon de conduite est rendu solidaire d'une canalisation délimitée par le haut par un couvercle de culasse de moteur à combustion interne.

Il est également proposé une méthode pour réguler un flux de gaz de carter en utilisant l'agencement selon l'invention, de façon permettre un fonctionnement simple et efficace dans un environnement encombré, par exemple sous un couvercle de culasse de moteur.

A cet effet, la méthode de régulation d'un flux de gaz chargés issu d'un carter de moteur à combustion comprend les étapes consistant essentiellement à :
- acheminer un flux de gaz chargés entre une amenée et un système de recyclage à l'admission d'air moteur (système dans lequel s'effectue typiquement une épuration des gaz chargés), en passant par le tronçon de conduite de l'agencement selon l'invention,
- laisser passer le flux de gaz chargés suivant un premier sens de circulation au travers du tronçon, dans un fonctionnement normal avec une pression positive, par le premier passage défini entre le clapet anti-retour de l'agencement (clapet anti-retour qui est dans une position avancée) et le clapet de dérivation maintenu dans sa position de contact contre la surface de siège stationnaire définie par le tronçon,
- fermer le premier passage en faisant reculer le clapet anti-retour jusqu'à venir en contact avec le clapet de dérivation, lorsque la pression devient négative, et permettre d'éloigner le clapet de dérivation de la surface de siège stationnaire lorsqu'un seuil de pression négative est atteint afin de libérer le deuxième passage entre le clapet de dérivation et la surface de siège stationnaire et obtenir ainsi un second sens de circulation au travers du tronçon, inverse du premier sens de circulation, ledit seuil de pression négative étant de préférence compris entre 30 et 50 mbar.

### BREVE DESCRIPTION DES DESSINS

D'autres caractéristiques et avantages de l'invention apparaîtront au cours de la description suivante de plusieurs modes de réalisation, donnés à titre d'exemples non limitatifs, en regard des dessins joints dans lesquels :
- la figure 1 est une vue en coupe verticale de l'agencement selon un premier mode de réalisation conforme à l'invention, monté à titre d'exemple sous un couvercle de culasse ;
- les figures 2A-2B et 3 sont des vues en coupe similaires de l'agencement de la figure 1, où les figures 2A-2B montrent respectivement un état ouvert sous l'effet de la pression positive et un état fermé du clapet anti-retour pour illustrer sa mobilité, tandis que la figure 3 illustre le mouvement de l'ensemble mobile formé par les deux clapets au-delà d'un seuil de pression négative pour l'ouverture du clapet de dérivation (mode by-pass) ;
- la figure 4 est une vue éclatée de l'agencement de la figure 1 ;
- les figures 5A et 5B illustrent un agencement selon un deuxième mode de réalisation conforme à l'invention, la figure 5A étant une vue de face montrant la face d'entrée de l'agencement, tandis que la figure 5B est une vue en coupe longitudinale ;
- les figures 6A, 6B et 6C illustrent un agencement selon un troisième mode de réalisation conforme à l'invention, ces figures montrant respectivement l'état fermé des deux clapets, l'ouverture d'un premier passage (mode anti-retour) par déplacement du clapet anti-retour sous l'effet d'une pression positive, et l'ouverture d'un deuxième passage (mode by-pass) par déplacement de l'ensemble mobile formé par les deux clapets sous l'effet d'une pression négative.

### DESCRIPTION DES MODES DE REALISATION PREFERES DE L'INVENTION

Sur les différentes figures, des références identiques indiquent des éléments identiques ou similaires.

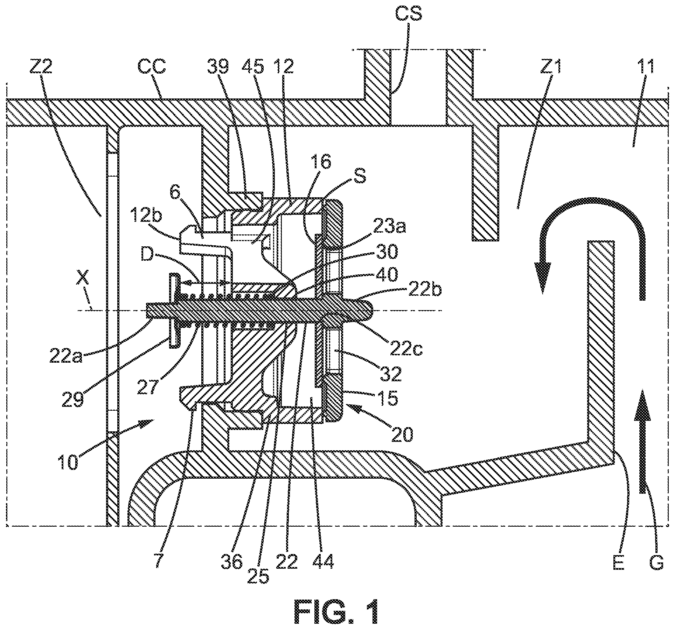

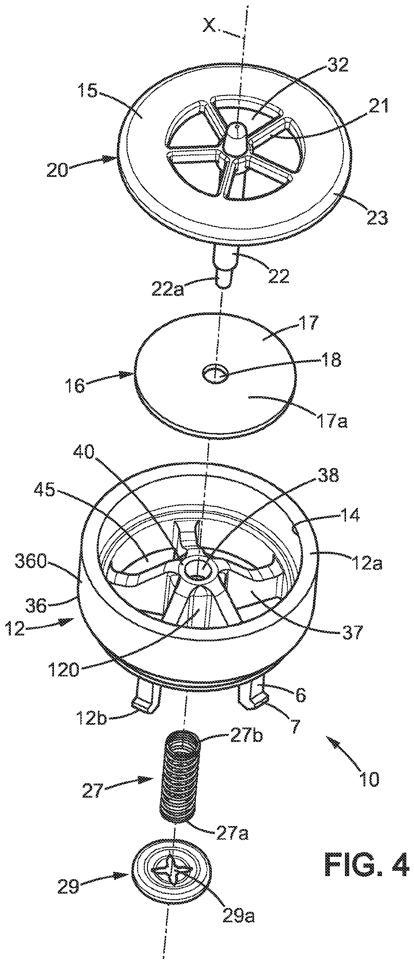

En référence aux figures 1 et 4, l'agencement 10 de régulation du flux de gaz chargés G est prévu pour s'adapter aux conditions de pression du côté d'un système qui sépare des parties liquides (et éventuellement solides) des gaz issus du carter de moteur à combustion interne. Comme bien visible sur la figure 1, les gaz chargés G qui sont directement issus du carter sont acheminés depuis une amenée 11 vers le système séparateur (non représenté et d'un type connu en soi, permettant par exemple de séparer l'huile par filtration, par impaction ou autre technique connue de séparation) servant à l'épuration des gaz chargés G. Ce n'est qu'après une ou plusieurs étapes de séparation d'huile que les gaz parviennent dans une conduite de liaison rejoignant l'admission d'air. L'agencement 10 comporte un tronçon de conduite 12 qui s'étend autour d'un axe longitudinal X. Ce tronçon de conduite 12 peut être réalisé d'une pièce ou résulter d'un assemblage.

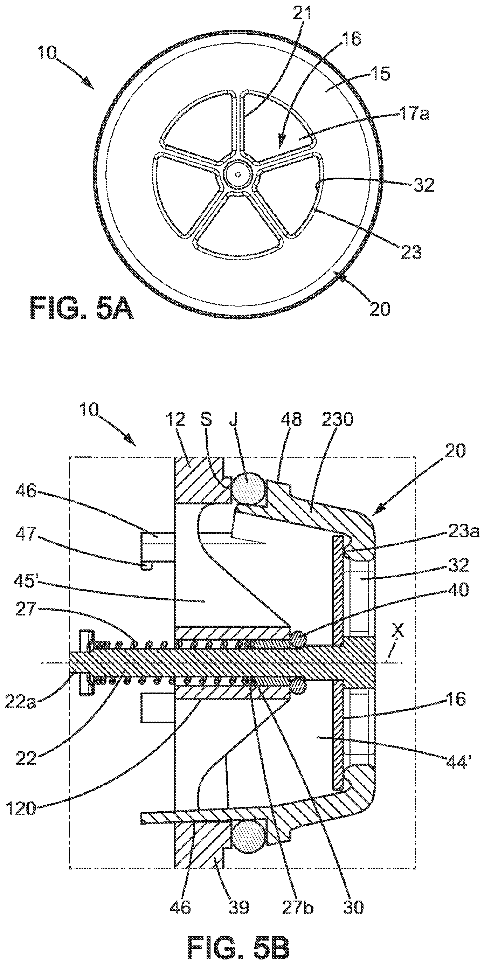

L'extrémité axiale 12a située du côté de l'amenée 11 définit une large ouverture 14, visible sur la figure 4. L'ouverture 14 peut être complètement obturée par un ensemble mobile à deux clapets 16 et 20, dont la face externe 15 (voir également figure 5A) peut présenter un format légèrement supérieur au format de l'ouverture 14. Le clapet anti-retour 16 forme un premier clapet situé au dos de la partie radiale d'un clapet de dérivation 20 qui forme le second clapet. Le clapet de dérivation 20 comprend ici une portion centrale 21 ajourée, qui se présente par exemple sous la forme d'une étoile avec une pluralité de branches (cinq branches dans l'exemple non limitatif de la figure 4), une tige de guidage 22 raccordée de façon solidaire à la portion centrale 21, et une portion périphérique 23. L'extrémité axiale 12a forme une face axiale annulaire qui définit la surface de siège stationnaire S, sur laquelle vient s'appuyer la portion périphérique 23. L'extrémité axiale 12a est ici formée sur une portion externe annulaire 36 du tronçon de conduite 12. La surface de siège stationnaire S effectivement en contact avec la portion périphérique 23 peut être une surface annulaire continue moins large que la face axiale annulaire de l'extrémité axiale 12a.

Le clapet de dérivation 20 est ici formé d'une pièce en un matériau préférentiellement rigide, alors que le clapet anti-retour 16 peut être entièrement flexible ou présenter une partie d'obturation 17 flexible, par exemple en élastomère ou caoutchouc. Dans ce cas, le matériau a une mémoire de forme afin d'éviter que le clapet 16 prenne une mauvaise conformation.

La portion centrale 21 et la portion périphérique 23 forment la partie radiale du clapet de dérivation. La partie périphérique 23 présente, d'un même côté (appelé ici dos de la partie radiale) une surface annulaire continue, de préférence adjacente à la portion centrale ajourée, qui définit un siège pour le clapet anti-retour 16. On peut voir que la tige 22 sert ici de support au clapet anti-retour. Une extrémité libre 22a de section réduite de la tige permet une insertion aisée de la tige 22 au travers du clapet anti-retour 16. L'autre extrémité 22b de la tige 22 peut former une saillie par rapport à la face externe 15. Le clapet anti-retour 16 peut présenter une forme de disque et présente un orifice central 18 pour le passage de la tige 22.

En référence à la figure 1, dans un état monté de l'ensemble à deux clapets, la tige 22 traverse linéairement un guide fixe 25 défini dans un manchon axial 120 du tronçon de conduite 12 et est utilisé pour orienter un élément de rappel élastique 27, par exemple un ressort, afin que la force de rappel s'exerce suivant la direction axiale définie par l'axe longitudinal X. Cette force de rappel est exercée ici vers l'avant (du côté opposé à l'amenée 11).

Ici, l'élément de rappel élastique 27 présente une première extrémité 27a, distale par rapport à l'ouverture 14, qui est rendue solidaire du mouvement du clapet de dérivation 20 en étant monté en appui contre un organe de retenue 29 fixe en translation par rapport au clapet 20. Cet organe de retenue 29 appartient par exemple au clapet de dérivation 20 ou peut être rapporté sur celui-ci. Une rondelle peut optionnellement former un tel organe de retenue 29, avec l'extrémité 22a de la tige 22 qui traverse l'orifice 29a de cet organe de retenue 29 et permet un montage à force. Lorsque la portion 23 est en contact avec la surface de siège S, l'organe de retenue 29 est typiquement situé à une distance D significative du manchon axial 120 et n'empêche donc pas la tige 22 de se déplacer librement vers l'arrière. Cette distance D est par exemple supérieure ou égale à la moitié ou au tiers de la longueur du ressort qui définit l'élément de rappel élastique 27.

La deuxième extrémité 27b, opposée et proximale par rapport à l'ouverture 14, est maintenue non coulissante par une surface de butée 30 immobile. Le manchon axial 120 présente par exemple un épaulement interne ou au moins un relief analogue pour définir une telle surface de butée 30.

On comprend que l'axe longitudinal X forme un axe de déplacement commun au clapet anti-retour 16 et au clapet de dérivation 20. Cette configuration avec un seul élément de rappel 27 inséré dans un guide fixe 25 qui fait partie du tronçon de conduite 12 permet de placer l'élément de rappel 27 au centre de l'agencement 10 et du même côté par rapport au clapet anti-retour 16. Cela permet aussi de minimiser la longueur de l'agencement 10 suivant l'axe longitudinal X.

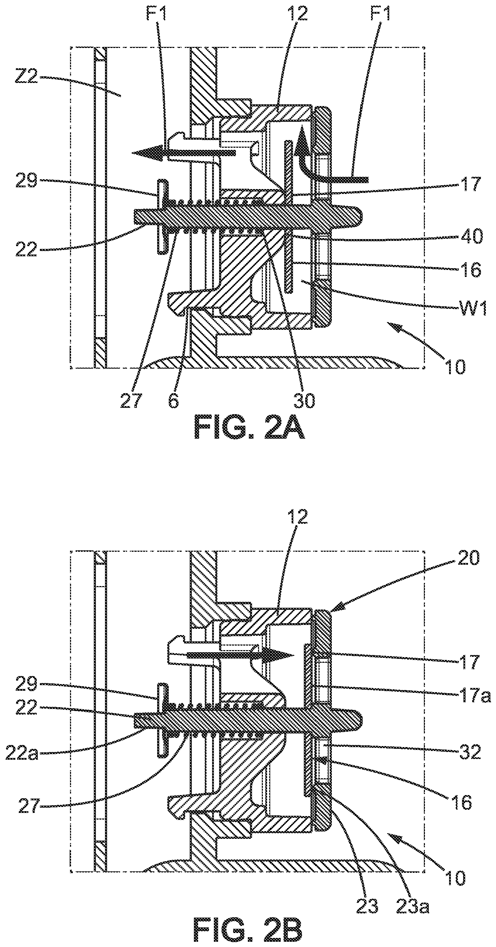

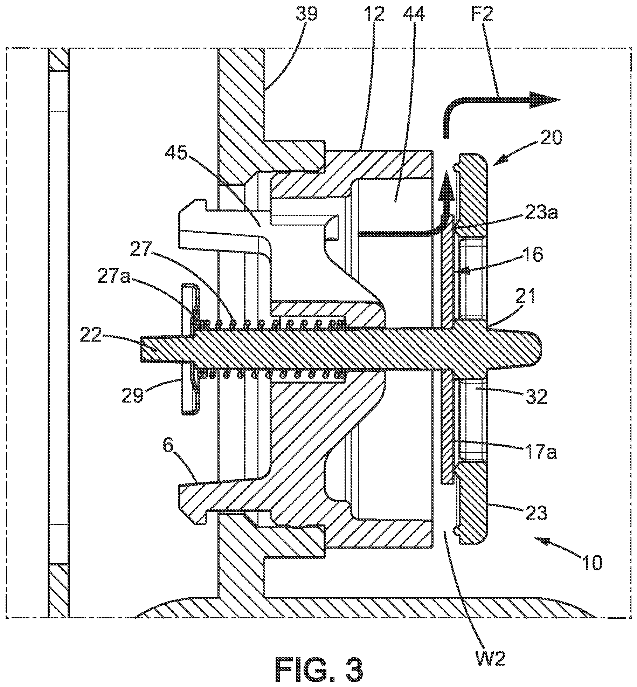

En référence à présent aux figures 2A-2B et 3, on peut voir que l'ensemble à double clapet cumule effectivement les fonctions de vanne anti-retour et de by-pass. Le mode de fonctionnement anti-retour est le mode de fonctionnement normal, lorsque le flux de gaz chargés G en provenance du carter (dans la zone amont Z1, située à droite sur les figures) permet de pousser vers l'avant le clapet anti-retour 16, comme illustré sur la figure 2A. Tant qu'il existe une telle pression positive, un premier passage W1 est libéré par l'avancée du clapet 16 et l'écoulement est réalisé selon un premier sens de circulation du flux de gaz chargés G (voir les flèches F1 sur la figure 2A, permettant aux gaz de parvenir dans la zone Z2 en aval du tronçon de conduite 12).

En pratique pour le cas non limitatif d'un moteur à essence turbo, une telle configuration de l'ensemble à double clapet permet à une partie importante du flux de gaz chargé de circuler vers le turbo (cf. cas de la figure 2A), typiquement après séparation par un système d'épuration.

Lorsque le tronçon de conduite 12 est fermé comme illustré sur la figure 1 ou la figure 2B, les gaz chargés ne peuvent pas être dirigés vers la zone Z2 en aval mais peuvent être dirigés vers un répartiteur, via la conduite supérieure CS.

Du fait de sa mobilité, ici le long de la tige 22, le clapet anti-retour 16 évite le retour des gaz vers les conduits d'entrée E. Ainsi, dès que cesse la poussée vers l'avant par le flux de gaz chargés G en raison d'une dépression en amont de l'agencement 10, la partie d'obturation 17 vient s'appuyer sur le siège 23a défini par la partie périphérique 23 du clapet de dérivation 20. En effet la poussée sur la partie d'obturation 17 est inversée et on obtient la configuration de fermeture du premier passage, comme bien visible sur la figure 2B. Dans un mode de fonctionnement normal, la pression est globalement positive et la configuration de fermeture est obtenue très brièvement.

Dans l'exemple des figures 1 à 4, le fonctionnement normal (sans déplacement du clapet de dérivation 20) s'opère tant que la pression négative ne dépasse pas, en valeur absolue, un seuil qui est par exemple compris entre 30 et 50 mbar.

Dans le fonctionnement en mode by-pass, l'agencement 10 de régulation permet de maintenir accolé le clapet anti-retour 16 contre le siège 23a et c'est un deuxième passage W2 qui est libéré par le recul du clapet de dérivation 20, sous l'effet de la pression négative. Ce déplacement de la partie radiale du clapet 20 se fait à l'encontre de la force de rappel de l'élément de rappel élastique 27, ici un ressort. On comprend que c'est optionnellement la raideur du ressort et la dimension de la surface subissant la poussée de gaz qui permettent de fixer le seuil d'obtention de l'ouverture du deuxième passage W2. Les gaz chargés sont donc renvoyés (flèche F2, second sens de circulation) et peuvent optionnellement être acheminés dans une conduite supérieure CS.

La partie d'obturation 17 du clapet anti-retour 16, de préférence dépourvue d'ouverture, présente une face déterminée 17a en contact annulaire avec le siège 23a dans la configuration de fermeture du premier passage W1. Ceci permet d'obturer les orifices 32 définis dans la portion centrale 21, comme bien visible sur les figures 2B et 3 (voir également la figure 5A). La face déterminée 17a est ainsi orientée suivant une direction qui est en opposition à la force de rappel exercée par l'élément de rappel élastique 27.

Le mouvement du ressort ou autre pièce analogue de rappel élastique est guidé par une partie intermédiaire de support de la tige de guidage 22, à distance de la zone de contact 22C avec le clapet anti-retour 16. Cette partie intermédiaire coulisse dans le guide fixe 25, ici de forme tubulaire. Comme le guide fixe 25 inclut la surface de butée 30 en contact avec l'extrémité 27b, celle-ci ne peut pas suivre le mouvement de la tige 22, contrairement à l'extrémité 22a.

Comme illustré sur les figures, l'élément de rappel élastique 27 peut être un simple ressort hélicoïdal monté de façon à être énergisé en compression lorsque le deuxième passage W2 est libéré. Cet état comprimé, causé par le recul de l'organe de retenue 29 qui suit le mouvement du clapet de dérivation 20, est bien visible sur la figure 3.

Comme bien visible sur la figure 4 notamment, le tronçon de conduite 12 peut être réalisé d'une seule pièce en matière plastique et présenter une extrémité d'ancrage 12b à l'opposé de l'extrémité 12a. Ce tronçon de conduite 12 définit un support de montage pour le clapet de dérivation 20 qui lui-même supporte le clapet anti-retour 16 via une tige 22.

Ici, il est prévu une seule tige 22. Mais dans des variantes, plusieurs éléments allongés peuvent optionnellement servir à supporter le clapet anti-retour 16, en utilisant plusieurs axe de coulissement supportés par des guides fixes agencés intérieurement dans le tronçon de conduite 12.

En référence à la figure 3, le déplacement des clapets 16 et 20 peut typiquement résulter d'une absence ou quasi absence de pression du côté de l'amenée 11 (pas de charge moteur). C'est par exemple le cas dans une phase en mode d'entrainement par les roues (phase « coasting mode » en anglais). Une partie du flux d'air propre normalement dirigée vers le turbo (ou vers une zone comparable) depuis la zone Z2 en aval où se fait l'épuration, est dirigée vers le répartiteur via le deuxième passage W2 et via une conduite supérieure CS comme visible sur la figure 1.

Dans l'exemple non limitatif représenté sur les figures 1 à 4, on peut voir que le tronçon de conduite 12 n'est pas complètement creux. Ainsi le manchon axial 120 est ici logé de manière centrale dans le volume interne délimité par la portion externe annulaire 36 et relié radialement à celle-ci par des entretoises 37. Le manchon axial 120 est ainsi rendu rigidement solidaire de la portion externe 36 par ces entretoises 37 qui s'étendent comme des rayons autour du conduit central 38. Le manchon axial 120 présente une extrémité 40, proximale par rapport au clapet anti-retour 16. L'extrémité 40 définit par exemple une butée annulaire orientée vers le clapet anti-retour 16.

Pour permettre de monter fixement le tronçon de conduite 12 dans une canalisation 39, la portion externe annulaire 36 peut présenter une ou plusieurs extensions axiales qui définissent l'extrémité d'ancrage 12b. Le tronçon de conduite 12 peut ainsi être encliqueté ou fixé en force, sans outil, dans un emplacement tubulaire délimité par une bordure (bordure ici circulaire) de la canalisation 39. Dans cet exemple non limitatif, la canalisation 39 est délimitée par le haut par un couvercle de culasse CC de moteur à combustion interne.

A la fin du montage du tronçon de conduite 12, la position de l'axe longitudinal X est bien déterminée et le tronçon 12 est fermement retenu par des pattes d'ancrage 6 qui prolongent axialement vers l'avant la portion externe 36 ou sont rapportés sur celle-ci. Dans cet exemple, au moins une des pattes 6 peut comporter un ergot de butée 7 qui empêche le retrait de l'agencement 10 vers l'arrière. On peut noter que le clapet anti-retour 16 et la partie radiale du clapet de dérivation ne sont pas des éléments insérés au travers de la zone de montage, ce qui limite le risque de détérioration lors du montage.

Les pattes 6, qui sont fixes, sont réparties autour de la tige 22 et n'interfèrent pas avec le mouvement de coulissement du clapet de dérivation 20.

En référence à la figure 4, la portion externe 36 comprend une face périphérique externe 360 adaptée pour se fixer par un contact radial étanche dans un conduit rigide 39 du circuit de gaz chargés. Entre la portion externe 36 et le manchon axial 120, les gaz chargés G peuvent s'écouler au travers d'une ou plusieurs ouvertures 45.

Un ou plusieurs passages longitudinaux comprenant cette ou ces ouvertures 45 peuvent communiquer avec l'amenée dans une configuration ouverte du premier passage W1 et du deuxième passage W2, respectivement. Il est prévu ici une chambre commune 44 de circulation des gaz chargés qui est adjacente au premier passage W1 et au deuxième passage W2. Dans cette chambre commune 44, le mouvement de coulissement du clapet anti-retour 16 peut s'effectuer entre l'extrémité 40 et un épaulement externe ou surface de butée formée à la jonction de la tige 22 et de la portion centrale 21.

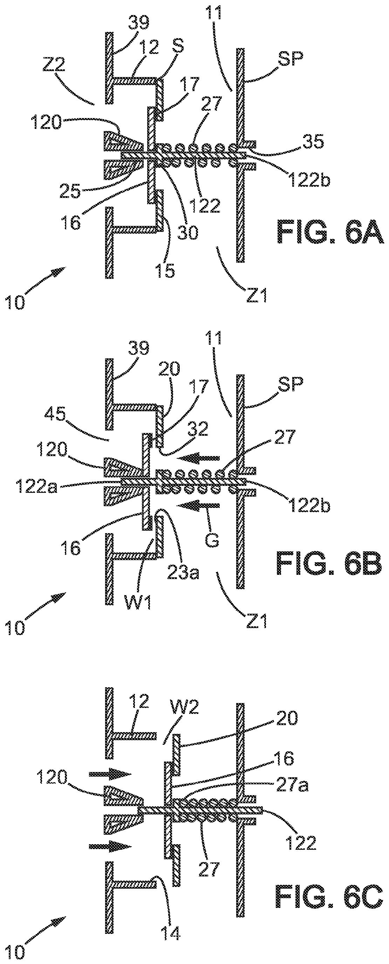

Sur la figure 2A et sur la figure 6B, on voit que la chambre 44 du passage longitudinal débouche axialement du côté arrière lorsque le premier passage W1 est ouvert ; dans ce cas, au moins la partie d'obturation 17 du clapet 16 s'étend en travers de ce passage longitudinal (dans la chambre 44), en ayant un effet de déviation qui n'empêche pas l'écoulement du flux de gaz chargés G selon une direction globalement longitudinale.

Sur la figure 2B et sur la figure 6C, la chambre 44 du passage longitudinal débouche radialement vers l'extérieur lorsque le deuxième passage W2 est ouvert. Ainsi en cas de pression négative avec le deuxième sens de circulation, les deux clapets 16 et 20 se complètent pour dévier et guider le flux vers une région qui est typiquement distincte de l'amenée 11.

Comme illustré sur les figures 1 à 2B notamment, le ressort hélicoïdal qui forme l'élément de rappel élastique 27 peut être en partie logé au travers du conduit central 38. Pour former le guide fixe 25, le conduit central 38 présente une restriction de section formée depuis l'extrémité 40 et qui rejoint la portion de conduit moins étroite qui loge le ressort du côté de son extrémité fixe.

Dans ce premier mode de réalisation, la portion périphérique 23 peut être sensiblement plane et on limite ainsi la masse (moins de matière plastique) du clapet de dérivation 20.

En référence à présent aux figures 5A et 5B, on peut voir que la portion périphérique 23 n'est pas nécessairement plane et peut inclure une jupe 230 de section annulaire. Dans ce cas, on comprend que le deuxième passage W2 est décalé axialement vers l'avant par rapport à au premier passage W1, contrairement au premier mode de réalisation. La chambre commune 44' est ici seulement entourée par la jupe 230 et communique avec les ouvertures 45' réparties autour du manchon axial 120. Dans ce deuxième mode de réalisation, l'agencement 10 présente une zone de contact directe entre le clapet de dérivation 20 et une paroi tubulaire de la canalisation 39, de préférence située en avant par rapport aux parties qui obturent les passages respectifs W1 et W2.

La portion centrale 21 ajourée reste ici inchangée et le fonctionnement du clapet anti-retour 16 est le même. L'élément de rappel élastique 27 s'étend ainsi également du côté opposé à la face externe 15. La pression positive permet de déplacer uniquement le clapet anti-retour 16 (le clapet de dérivation 20 restant dans sa position d'obturation) et la face externe 15 constitue ainsi une face d'entrée pour les gaz chargés G circulant à travers le premier passage W1.

Un joint supplémentaire est utilisé à titre optionnel à l'extrémité 40. Un joint annulaire J peut être prévu à l'extrémité de la jupe 230 pour réaliser le contact étanche contre la surface de siège stationnaire S. Un bourrelet ou relief externe annulaire 48 analogue peut être formé sur la jupe 230 pour maintenir axialement la position du joint J.

Comme bien visible sur la figure 5B, le tronçon de conduite 12 peut optionnellement faire partie intégrante de la canalisation 39. L'opération de montage se fait alors par des pattes d'ancrage 46 qui appartiennent au clapet de dérivation 20 ou sont rapportés sur celui-ci.

Dans ce deuxième mode de réalisation, au moins une des pattes 46 peut comporter un ergot de butée 47 agencé pour délimiter une fin de course du mouvement de recul du clapet de dérivation 20. La ou les pattes 46 forment ici des extensions axiales de la jupe 230 et ont chacune une surface de guidage 46a, orientée radialement vers l'extérieur et en contact avec une paroi tubulaire de la canalisation 39. Mais bien entendu, d'autres organes d'ancrage peuvent être utilisés, en alternative ou en complément, tout en laissant un degré de liberté en coulissement pour le clapet de dérivation 20.

Bien que l'élément de rappel élastique 27 soit ici en prise avec le clapet de dérivation 20 (par le contact axial contre l'organe de retenue 29), sans toucher le clapet 16 ni interférer avec le déplacement du clapet 16, on prévoit dans des variantes de réalisation que l'élément de rappel élastique soit en prise directement avec le clapet anti-retour 16. Cela peut être le cas en particulier lorsque le clapet anti-retour 16 est sous la forme d'une membrane ayant une portion statique qui reste fixe par rapport au clapet de dérivation 20. La force de rappel peut alors être exercée sur cette portion statique sans empêcher la libération du premier passage W1.

En référence à présent aux figures 6A, 6B et 6C, on peut voir que l'élément de rappel élastique 27 peut être placé du côté de l'amenée 11, tout en exerçant une force de rappel sur le clapet de dérivation 20 vers l'avant pour obturer par défaut le deuxième passage W2. Un guide fixe additionnel 35 peut être prévu pour guider l'extrémité 122b de la tige 122, tandis que l'autre extrémité 122A coulisse au travers du guide fixe 25 défini par le manchon axial 120. Bien que les figures montrent un guide fixe 25 formé intérieurement dans le tronçon de conduite 12, on comprend qu'il peut aussi être placé plus en avant dans la zone en aval Z2.

L'agencement 10 peut présenter une surface de butée 30 immobile formée par le guide fixe 25. Cette surface de butée 30 est ici orientée dans le sens opposé par rapport aux modes de réalisation précédemment décrits, en étant placée en arrière par rapport à la position de la partie d'obturation 17 du clapet anti-retour 16. L'élément de rappel élastique 27 s'étend donc essentiellement du côté de la face d'entrée (face externe 15) de l'agencement 10.

Sous l'effet de la pression positive, le flux de gaz chargés G permet de pousser sélectivement le clapet anti-retour 16 dans une position éloignée du siège 23a, comme illustré sur la figure 6B. Ici lorsqu'un ressort forme l'élément de rappel élastique 27, il exerce une force de rappel qui est orientée dans le même sens que la poussée des gaz chargés dans le mode normal de circulation.

Le clapet de dérivation 20, situé en arrière par rapport au tronçon de conduite 12, reste donc en contact avec la surface de siège stationnaire S et l'agencement 10 fonctionne dans un mode anti-retour (mode normal de circulation). Le chemin de fuite formé par le deuxième passage W2 reste fermé dans ce mode.

Comme bien visible sur la figure 6C, un état comprimé du ressort est obtenu seulement dans le mode by-pass. Dans cette configuration du ressort (ou tout autre élément de rappel élastique équivalent, et plus généralement tout moyen permettant une poussée directe, indirecte ou une répulsion à distance, dans une direction déterminée). La pression négative est alors suffisante pour faire reculer le clapet de dérivation 20 et le deuxième passage W2 est libéré.

Comme dans les premier et deuxième modes de réalisation, le clapet anti-retour 16 peut être déplacé avec une pression moindre que le seuil de pression nécessaire pour comprimer le ressort ou seuil équivalent d'énergisation de l'élément de rappel élastique 27. Par conséquent, le premier passage W1 qui débouche axialement vers l'amenée 11 peut être systématiquement fermé lorsque le deuxième passage W2 est libéré pour former un chemin de fuite selon une direction radiale.

Un des avantages de l'invention est un gain en compacité (qui peut grandement faciliter l'installation de l'agencement) tout en obtenant une réponse très satisfaisante des clapets en fonction des pressions s'exerçant de part et d'autre du tronçon de conduite.

L'agencement 10 de régulation de flux de gaz de carter est particulièrement bien adapté pour équiper des solutions de ventilation à carter fermé (CCV - « closed crankcase ventilation ») qui sont exigeantes en terme d'efficacité (cf. norme EURO 6 et tendance continue à une plus grande exigence des normes européennes d'émission) dans des véhicules de format compact.

Il doit être évident pour les personnes versées dans l'art que la présente invention permet des modes de réalisation sous de nombreuses autres formes spécifiques sans l'éloigner du domaine d'application de l'invention comme revendiqué. Par exemple, le contexte d'utilisation n'est pas limité à un moteur d'un véhicule automobile et la position de l'agencement 10 ainsi que ses dimensions générales peuvent évoluer selon les besoins concrets. Par ailleurs, bien que les figures montrent une configuration coaxiale des parties d'obturation des clapets 16 et 20, avec un format circulaire autour d'une même tige 22 qui supporte l'élément de rappel 27, des agencements alternatifs peuvent présenter le cas échéant des formats différents pour les parties d'obturation et/ou une position différente de l'élément de rappel 27 (en périphérie, par exemple autour du tronçon de conduite 12) et/ou une distribution non homogène des orifices 32 de la portion centrale 21 autour de l'axe longitudinal X. Egalement, la structure formant le guide fixe 25 peut optionnellement être formée séparément du tronçon de conduite 12.

## Revendications

1. Agencement (10) de régulation d'un flux de gaz chargés (G) issu d'un carter de moteur à combustion interne, destiné à être placé entre une zone amont (Z1) d'amenée de gaz chargés et une zone en aval (Z2) communiquant avec un système de recyclage à l'admission d'air du moteur, comprenant:
- un clapet anti-retour (16) qui présente une partie d'obturation (17) déplaçable avec une pression positive pour définir un premier passage (W1) pour un premier sens de circulation ;
- un clapet de dérivation (20) mis en mouvement par une pression négative et permettant de définir un deuxième passage (W2) pour un second sens de circulation, inverse du premier sens de circulation ;
- un tronçon de conduite (12) qui présente une surface de siège stationnaire (S) adaptée pour délimiter avec le clapet de dérivation (20) le deuxième passage (W2) ;
- un élément de rappel élastique (27) en prise avec l'un parmi le clapet anti-retour (16) et le clapet de dérivation (20) ;
**caractérisé en ce que** le clapet de dérivation (20) définit un siège (23a) sur lequel la partie d'obturation du clapet anti-retour (16) vient s'appuyer dans une configuration de fermeture du premier passage (W1), l'élément de rappel élastique (27) exerçant une force de rappel, orientée suivant une première direction dite avant, qui sollicite le clapet de dérivation (20) vers une position d'obturation du deuxième passage (W2),
la partie d'obturation (17) du clapet anti-retour (16) et le clapet de dérivation (20) étant adaptés pour reculer suivant une deuxième direction dite arrière opposée à la première direction, sous l'effet de la pression négative.

2. Agencement selon la revendication 1, dans lequel l'élément de rappel élastique (27) s'étend entre une première extrémité (27a) et une deuxième extrémité (27b) qui sont alignées selon un axe de déplacement commun au clapet anti-retour et au clapet de dérivation, la première extrémité (27a) étant solidaire en coulissement du clapet de dérivation (20).

3. Agencement selon la revendication 1 ou 2, dans lequel ladite partie d'obturation (17), de préférence dépourvue d'ouverture, présente une face déterminée (17a) en contact annulaire avec le siège (23a) dans la configuration de fermeture du premier passage (W1), ladite face déterminée étant orientée suivant la deuxième direction, en opposition à la force de rappel.

4. Agencement selon l'une quelconque des revendications précédentes, dans lequel le clapet de dérivation (20) définit au moins un orifice de passage en vis-à-vis de la partie d'obturation (17), le clapet anti-retour (16) étant non sollicité ou moins sollicité vers l'avant par l'élément de rappel élastique (27) que le clapet de dérivation (20), de sorte que le clapet de dérivation recule pour libérer le deuxième passage (W2) seulement dans une configuration fermée du premier passage (W1) dans laquelle la partie d'obturation (17) obture ledit orifice de passage.

5. Agencement selon l'une quelconque des revendications précédentes, dans lequel le clapet anti-retour (16) et le clapet de dérivation (20) sont chacun mobiles en coulissement et guidés par au moins une même tige (22 ; 122), qui de préférence fait partie du clapet de dérivation (20).

6. Agencement selon la revendication 5, dans lequel la tige (22) présente une partie, de préférence une partie intermédiaire (22c) distante des extrémités (22a, 22b) de la tige, qui coulisse dans un guide fixe déterminé (25) pourvu d'une surface de butée (30) pour définir la position d'une extrémité fixe (27b) de l'organe de rappel élastique (27), l'organe de rappel élastique étant de préférence un ressort hélicoïdal.

7. Agencement selon la revendication 5, comprenant un guide fixe déterminé (25) pour le coulissement d'une première extrémité (122a) de la tige (122) et un guide fixe additionnel (35) pour guider une deuxième extrémité (122b) de la tige (122).

8. Agencement selon la revendication 6 ou 7, dans lequel le tronçon de conduite (12), réalisé d'une pièce en matière plastique, définit un support de montage pour le clapet de dérivation (20) et comprend :
- un manchon axial (120) qui définit le guide fixe déterminé (25) et présente une extrémité (40) proximale par rapport au clapet anti-retour (16) ;
- une portion externe annulaire (36) solidaire du manchon axial (120), comprenant une face périphérique externe (360) adaptée pour se fixer par un contact radial étanche dans un conduit rigide du circuit de gaz chargés, la portion externe annulaire (36) définissant par une extrémité axiale (12a) ladite surface de siège stationnaire (S), au moins une ouverture de passage (14) étant délimitée par l'extrémité axiale (12a) ; et
- au moins un passage longitudinal (44, 45 ; 44', 45') défini entre le manchon axial (120) et la portion externe annulaire (36), et débouchant du côté de l'ouverture de passage (14) dans une configuration ouverte du premier passage (W1) et du deuxième passage (W2), respectivement ;
sachant que le clapet anti-retour (16), qui comprend de préférence un matériau élastomère, est monté mobile en coulissement sur la tige (22 ; 122) entre l'extrémité proximale (40), de préférence fermée, du manchon axial (120) et une portion (21) ajourée du clapet de dérivation (20).

9. Agencement selon l'une quelconque des revendications 5 à 7, dans lequel le clapet de dérivation (20) comporte :
- une portion (21) ajourée raccordée centralement à la tige (22) ; et
- une jupe (230), de préférence de forme générale cylindrique, qui supporte extérieurement un joint annulaire d'étanchéité (J) adapté pour venir s'appuyer contre la surface de siège stationnaire (S).

10. Agencement selon la revendication 9, dans lequel le clapet de dérivation (20) présente des pattes de guidage (46), allongées chacune suivant la première direction depuis une zone annulaire en contact avec ledit joint (J), et adaptées pour s'ajuster contre une face interne annulaire du tronçon de conduite (12) et délimiter une fin de course du mouvement de recul du clapet de dérivation (20).

11. Agencement selon l'une quelconque des revendications précédentes, dans lequel l'élément de rappel élastique (27) est un ressort monté de façon à être énergisé en compression lorsque le deuxième passage (W2) est libéré.

12. Agencement selon la revendication 11, dans lequel le clapet de dérivation (20) présente une portion (21) ajourée qui définit une face d'entrée pour les gaz chargés circulant à travers le premier passage (W1), le ressort s'étendant essentiellement du côté opposé à la face d'entrée.

13. Agencement selon la revendication 11, dans lequel le clapet de dérivation (20) présente une portion (21) ajourée qui définit une face d'entrée pour les gaz chargés circulant à travers le premier passage (W1), le ressort s'étendant essentiellement du côté de la face d'entrée.

14. Agencement selon l'une quelconque des revendications précédentes, dans lequel le tronçon de conduite (12) est solidaire d'une canalisation (39) délimitée par le haut par un couvercle de culasse (CC) de moteur à combustion interne.

15. Méthode de régulation d'un flux de gaz chargés issu d'un carter de moteur à combustion interne, mise en oeuvre par utilisation de l'agencement (10) de régulation tel que défini dans l'une quelconque des revendications précédentes, la méthode comprenant les étapes consistant essentiellement à :
- acheminer un flux de gaz chargés (G) entre une amenée (11) et un système de recyclage à l'admission d'air moteur, en passant par le tronçon de conduite (12) de l'agencement,
- laisser passer le flux de gaz chargés suivant un premier sens de circulation au travers du tronçon de conduite (12), dans un fonctionnement normal avec une pression positive, par le premier passage (W1) défini entre le clapet anti-retour (16) de l'agencement dans une position avancée et le clapet de dérivation (20) maintenu dans sa position de contact contre la surface de siège stationnaire (S) définie par le tronçon (12), et
- fermer le premier passage (W1) en faisant reculer le clapet anti-retour (16) jusqu'à venir en contact avec le clapet de dérivation (20), lorsque la pression devient négative, et permettre d'éloigner le clapet de dérivation (20) de la surface de siège stationnaire (S) lorsqu'un seuil de pression négative est atteint afin de libérer le deuxième passage(W2) entre le clapet de dérivation (20) et la surface de siège stationnaire (S) et obtenir ainsi un second sens de circulation au travers du tronçon (12), inverse du premier sens de circulation, le seuil de pression négative étant de préférence compris entre 30 et 50 mbar.

## Patentansprüche

1. Anordnung (10) zur Regelung eines von einem Verbrennungsmotor-Kurbelgehäuse stammenden Stroms beladener Gase (G), die dazu bestimmt ist, zwischen einer stromaufwärtigen Zone (Z1) der Zufuhr beladener Gase und einer stromabwärtigen Zone (Z2) angeordnet zu werden, die mit einem Rückführsystem zum Lufteinlass des Motors kommuniziert, die enthält:
- ein Rückschlagventil (16), das einen Verschlussbereich (17) aufweist, der mit einem positiven Druck verschiebbar ist, um einen ersten Durchlass (W1) für eine erste Fließrichtung zu definieren;
- ein Abzweigventil (20), das von einem negativen Druck in Bewegung versetzt wird und es ermöglicht, einen zweiten Durchlass (W2) für eine zweite Fließrichtung, entgegengesetzt zur ersten Fließrichtung, zu definieren;
- einen Leitungsabschnitt (12), der eine ortsfeste Sitzfläche (S) aufweist, die geeignet ist, mit dem Abzweigventil (20) den zweiten Durchlass (W2) zu begrenzen;
- ein elastisches Rückstellelement (27) in Eingriff mit einem von dem Rückschlagventil (16) und dem Abzweigventil (20);
**dadurch gekennzeichnet, dass** das Abzweigventil (20) einen Sitz (23a) definiert, auf den der Verschlussbereich des Rückschlagventils (16) sich in einer Schließkonfiguration des ersten Durchlasses (W1) auflegt, wobei das elastische Rückstellelement (27) eine Rückstellkraft ausübt, die gemäß einer ersten so genannten vorderen Richtung ausgerichtet ist, die das Abzweigventil (20) in eine Verschlussstellung des zweiten Durchlasses (W2) beaufschlagt,
wobei der Verschlussbereich (17) des Rückschlagventils (16) und das Abzweigventil (20) geeignet sind, unter der Wirkung des negativen Drucks gemäß einer zweiten so genannten hinteren Richtung entgegengesetzt zur ersten Richtung zurückzuweichen.

2. Anordnung nach Anspruch 1, wobei das elastische Rückstellelement (27) sich zwischen einem ersten Ende (27a) und einem zweiten Ende (27b) erstreckt, die gemäß einer gemeinsamen Verschiebeachse des Rückschlagventils und des Abzweigventils fluchtend ausgerichtet sind, wobei das erste Ende (27a) gleitend fest mit dem Abzweigventil (20) verbunden ist.

3. Anordnung nach Anspruch 1 oder 2, wobei der Verschlussbereich (17), der vorzugsweise keine Öffnung hat, eine bestimmte Seite (17a) in Ringkontakt mit dem Sitz (23a) in der Schließkonfiguration des ersten Durchlasses (W1) aufweist, wobei die bestimmte Seite gemäß der zweiten Richtung entgegengesetzt zur Rückstellkraft ausgerichtet ist.

4. Anordnung nach einem der vorhergehenden Ansprüche, wobei das Abzweigventil (20) mindestens ein Durchlassloch gegenüber dem Verschlussbereich (17) definiert, wobei das Rückschlagventil (16) vom elastischen Rückstellelement (27) nicht oder weniger nach vorne beaufschlagt wird als das Abzweigventil (20), so dass das Abzweigventil zurückweicht, um den zweiten Durchlass (W2) nur in einer geschlossenen Konfiguration des ersten Durchlasses (W1) freizugeben, in der der Verschlussbereich (17) das Durchlassloch verschließt.

5. Anordnung nach einem der vorhergehenden Ansprüche, wobei das Rückschlagventil (16) und das Abzweigventil (20) je gleitbeweglich sind und von mindestens einer gleichen Stange (22; 122) geführt werden, die vorzugsweise Teil des Abzweigventils (20) ist.

6. Anordnung nach Anspruch 5, wobei die Stange (22) einen Bereich, vorzugsweise einen von den Enden (22a, 22b) der Stange entfernten Zwischenbereich (22c) aufweist, der in einer bestimmten ortsfesten Führung (25) gleitet, die mit einer Anschlagfläche (30) versehen ist, um die Stellung eines ortsfesten Endes (27b) des elastischen Rückstellorgans (27) zu definieren, wobei das elastische Rückstellorgan vorzugsweise eine Spiralfeder ist.

7. Anordnung nach Anspruch 5, die eine bestimmte ortsfeste Führung (25) für das Gleiten eines ersten Endes (122a) der Stange (122) und eine zusätzliche ortsfeste Führung (35) zum Führen eines zweiten Endes (122b) der Stange (122) enthält.

8. Anordnung nach Anspruch 6 oder 7, wobei der Leitungsabschnitt (12), der aus einem Kunststoffbauteil hergestellt ist, einen Montageträger für das Abzweigventil (20) bildet und enthält:
- eine axiale Muffe (120), die die bestimmte ortsfeste Führung (25) definiert und ein proximales Ende (40) bezüglich des Rückschlagventils (16) aufweist;
- einen fest mit der axialen Muffe (120) verbundenen ringförmigen äußeren Teil (36), der eine äußere Umfangsseite (360) enthält, die geeignet ist, durch einen dichten axialen Kontakt in einem steifen Kanal des Kreislaufs beladener Gase befestigt zu werden, wobei der ringförmige äußere Teil (36) durch ein axiales Ende (12a) die ortsfeste Sitzfläche (S) definiert, wobei mindestens eine Durchlassöffnung (14) vom axialen Ende (12a) begrenzt wird; und
- mindestens einen Längsdurchlass (44, 45; 44', 45'), der zwischen der axialen Muffe (120) und dem ringförmigen äußeren Teil (36) definiert wird und auf der Seite der Durchlassöffnung (14) in einer offenen Konfiguration des ersten Durchlasses (W1) bzw. des zweiten Durchlasses (W2) mündet;
wobei das Rückschlagventil (16), das vorzugsweise ein Elastomermaterial enthält, zwischen dem proximalen, vorzugsweise geschlossenen Ende (40) der axialen Muffe (120) und einem gelochten Teil (21) des Abzweigventils (20) gleitbeweglich auf die Stange (22; 122) montiert ist.

9. Anordnung nach einem der Ansprüche 5 bis 7, wobei das Abzweigventil (20) aufweist:
- einen gelochten Teil (21), der zentral mit der Stange (22) verbunden ist; und
- eine Schürze (230), vorzugsweise von allgemein zylindrischer Form, die außen eine Ringdichtung (J) trägt, die geeignet ist, sich gegen die ortsfeste Sitzfläche (S) anzulegen.

10. Anordnung nach Anspruch 9, wobei das Abzweigventil (20) Führungslaschen (46) aufweist, die sich je gemäß der ersten Richtung von einer Ringzone in Kontakt mit der Dichtung (J) erstrecken und geeignet sind, sich gegen eine ringförmige Innenseite des Leitungsabschnitts (12) anzupassen, und ein Hubende der Rückweichbewegung des Abzweigventils (20) zu begrenzen.

11. Anordnung nach einem der vorhergehenden Ansprüche, wobei das elastische Rückstellelement (27) eine Feder ist, die so montiert ist, dass sie druckvorgespannt wird, wenn der zweite Durchlass (W2) freigegeben wird.

12. Anordnung nach Anspruch 11, wobei das Abzweigventil (20) einen gelochten Teil (21) aufweist, der eine Eingangsseite für die durch den ersten Durchlass (W1) strömenden beladenen Gase definiert, wobei die Feder sich im Wesentlichen auf der der Eingangsseite entgegengesetzten Seite erstreckt.

13. Anordnung nach Anspruch 11, wobei das Abzweigventil (20) einen gelochten Teil (21) aufweist, der eine Eingangsseite für die durch den ersten Durchlass (W1) strömenden beladenen Gase definiert, wobei die Feder sich im Wesentlichen auf der Seite der Eingangsseite erstreckt.

14. Anordnung nach einem der vorhergehenden Ansprüche, wobei der Leitungsabschnitt (12) fest mit einer Rohrleitung (39) verbunden ist, die von oben durch eine Zylinderkopfhaube (CC) eines Verbrennungsmotors begrenzt wird.

15. Verfahren zur Regelung eines Stroms beladener Gase, der von einem Verbrennungsmotor-Kurbelgehäuse stammt, durchgeführt unter Verwendung der Regelungsanordnung (10) wie in einem der vorhergehenden Ansprüche definiert, wobei das Verfahren die Schritte enthält, die im Wesentlichen darin bestehen:
- einen Strom beladener Gase (G) zwischen einer Zufuhr (11) und einem Rückführsystem zum Motor-Lufteinlass über den Leitungsabschnitt (12) der Anordnung zu befördern,
- bei einem Normalbetrieb mit einem positiven Druck den Strom beladener Gase gemäß einer ersten Fließrichtung durch den Leitungsabschnitt (12) durch den ersten Durchlass (W1) durchzulassen, der zwischen dem Rückschlagventil (16) der Anordnung in einer Vorschubstellung und dem Abzweigventil (20) definiert wird, das in seiner Kontaktstellung gegen die vom Abschnitt (12) definierte ortsfeste Sitzfläche (S) gehalten wird, und
- den ersten Durchlass (W1) zu schließen, indem das Rückschlagventil (16) zurückgeschoben wird, bis es mit dem Abzweigventil (20) in Kontakt kommt, wenn der Druck negativ wird, und zu erlauben, das Abzweigventil (20) von der ortsfesten Sitzfläche (S) zu entfernen, wenn eine negative Druckschwelle erreicht wird, um den zweiten Durchlass (W2) zwischen dem Abzweigventil (20) und der ortsfesten Sitzfläche (S) freizugeben und so eine zweite Fließrichtung durch den Abschnitt (12) entgegengesetzt zur ersten Fließrichtung zu erhalten, wobei die negative Druckschwelle vorzugsweise zwischen 30 und 50 mbar liegt.

## Claims

1. Arrangement (10) for controlling a flow of laden gases (G) issuing from a crankcase of an internal combustion engine, intended to be placed between an upstream inlet area (Z1) supplying the laden gases and a downstream area (Z2) in communication with an engine air intake recirculation system, comprising:
- a check valve (16) having a closing member (17) movable by positive pressure so as to define a first passage (W1) for a first flow direction;
- a bypass valve (20) set in motion by negative pressure and enabling the defining of a second passage (W2) for a second flow direction that is opposite the first flow direction;
- a pipe segment (12) having a stationary seating surface (S) adapted to define, with the bypass valve (20), the second passage (W2);
- an elastic biasing member (27) engaged with one among the check valve (16) and the bypass valve (20);
**characterized in that** the bypass valve (20) defines a seat (23a) on which the closing member of the check valve (16) comes to rest in a closed configuration of the first passage (W1), the elastic biasing member (27) exerting a restoring force directed in a first direction referred to as the forward direction, which urges the bypass valve (20) towards a position which closes the second passage (W2), the closing member (17) of the check valve (16) and the bypass valve (20) being adapted to retreat in a second direction called the rearward direction that is opposite to the first direction, under the effect of negative pressure.

2. Arrangement according to claim 1, wherein the elastic biasing member (27) extends between a first end (27a) and a second end (27b) which are aligned along an axis of movement common to the check valve and bypass valve, the first end (27a) being slidingly integral with the bypass valve (20).

3. Arrangement according to claim 1 or 2, wherein said closing member (17), preferably having no opening, has a predefined face (17a) in annular contact with the seat (23a) in the closed configuration of the first passage (W1), said predefined face being oriented in the second direction, in opposition to the restoring force.

4. Arrangement according to any one of the preceding claims, wherein the bypass valve (20) defines at least one passage orifice facing the closing member (17), the check valve (16) being forwardly unbiased or less biased by the elastic biasing member (27) than the bypass valve (20), such that the bypass valve moves rearward to clear the second passage (W2) only in a closed configuration of the first passage (W1) in which the closing member (17) seals said passage orifice.

5. Arrangement according to any one of the preceding claims, wherein the check valve (16) and the bypass valve (20) are each slidable and guided by at least one common rod (22; 122), which preferably is part of the bypass valve (20).

6. Arrangement according to claim 5, wherein the rod (22) has a portion, preferably an intermediate portion (22c) away from the ends (22a, 22b) of the rod, which slides in a predefined fixed guide (25) provided with a stop surface (30) which defines the position of a fixed end (27b) of the elastic biasing member (27), the elastic biasing member preferably being a coil spring.

7. Arrangement according to claim 5, comprising a predefined fixed guide (25) for the sliding of a first end (122a) of the rod (122) and an additional fixed guide (35) for guiding a second end (122b) of the rod (122).

8. Arrangement according to claim 6 or 7, wherein the pipe segment (12), formed as a single plastic part, defines a mounting bracket for the bypass valve (20) and comprises:
- an axial sleeve (120) which defines the predefined fixed guide (25) and has an end (40) proximal to the check valve (16);
- an annular outer portion (36) integral with the axial sleeve (120), comprising an outer peripheral face (360) adapted for attachment by fluidtight radial contact in a rigid pipe of the circuit for laden gases, the annular outer portion (36) defining, by an axial end (12a), said stationary seating surface (S), at least one passage opening (14) being bounded by the axial end (12a); and
- at least one longitudinal passage (44, 45; 44', 45') defined between the axial sleeve (120) and the annular outer portion (36), and open at the passage opening (14) side in an open configuration of the first passage (W1) and second passage (W2), respectively;
knowing that the check valve (16), which preferably comprises elastomeric material, is mounted on the rod (22; 122) so as to slide between the proximal end (40), preferably closed, of the axial sleeve (120) and a perforated portion (21) of the bypass valve (20).

9. Arrangement according to any one of claims 5 to 7, wherein the bypass valve (20) comprises:
- a perforated portion (21) centrally connected to the rod (22); and
- a skirt (230), preferably of generally cylindrical shape, which externally supports an O-ring seal (J) adapted to come to bear against the stationary seating surface (S).

10. Arrangement according to claim 9, wherein the bypass valve (20) comprises guide tabs (46), each extending in the first direction from an annular area in contact with said O-ring (J), and each adapted to fit against an inner annular face of the pipe segment (12) and define an end position of the backward travel of the bypass valve (20).

11. Arrangement according to any preceding claim, wherein the elastic biasing member (27) is a spring, mounted so as to be energized by compression when the second passage (W2) is clear.

12. Arrangement according to claim 11, wherein the bypass valve (20) has a perforated portion (21) which defines an inlet face for the laden gases flowing through the first passage (W1), the spring extending substantially from the side opposite the inlet face.

13. Arrangement according to claim 11, wherein the bypass valve (20) has a perforated portion (21) which defines an inlet face for the laden gases flowing through the first passage (W1), the spring extending substantially from the inlet face side.

14. Arrangement according to any preceding claim, wherein the pipe segment (12) is integral with a duct (39) bounded at the top by a cylinder head cover (CC) of an internal combustion engine.

15. Method for controlling a flow of laden gases issuing from a crankcase of an internal combustion engine, implemented by using the arrangement (10) as defined in any one of the preceding claims, the method comprising the steps consisting essentially of:
- routing a flow of laden gases (G) between an inlet (11) and an air intake recirculation system of the engine, passing through the pipe segment (12) of the arrangement,
- allowing the flow of laden gases to travel in a first flow direction through the pipe segment (12), during normal operation with positive pressure, via the first passage (W1) defined between the check valve (16) of the arrangement which is in a forward position and the bypass valve (20) held in its contact position against the stationary seating surface (S) defined by the segment (12), and
- closing the first passage (W1) by moving the check valve (16) rearward until it comes into contact with the bypass valve (20), when the pressure becomes negative, and allowing the bypass valve (20) to move away from the stationary seating surface (S) when a negative pressure threshold is reached in order to clear the second passage (W2) between the bypass valve (20) and the stationary seating surface (S) and thereby obtain a second flow direction through the segment (12), opposite to the first flow direction, the negative pressure threshold preferably being between 30 and 50 mbar.
